# EUROPÄISCHE PATENTSCHRIFT

(11) **EP 2 584 682 B1**
(45) Veröffentlichungstag und Bekanntmachung des Hinweises auf die Patenterteilung: **08.05.2019**
(21) Anmeldenummer: 12185010.1
(22) Anmeldetag: 19.09.2012
(51) Int. Cl.: H02K 1/24, H02K 7/116, H02K 19/10, H02K 19/22, H02K 19/24, H02K 21/04, H02K 7/18

(54) **Elektrische Maschine sowie Verwendung einer elektrischen Maschine**
Electric machine, and the use of an electrical machine
Moteur électrique et utilisation d'un tel moteur

(30) Priorität: 19.10.2011 DE 102011084770
(43) Veröffentlichungstag der Anmeldung: 24.04.2013
(73) Patentinhaber: ROBERT BOSCH GMBH, 70442 Stuttgart (DE)
(72) Erfinder: Stubner, Armin, 77815 Buehl-Altschweier (DE); Evans, Steven Andrew, 77815 Buehl (DE); Martin, Norbert, 77855 Achern (DE)

(56) Entgegenhaltungen:
- EP-A1- 0 394 528
- DE-A1- 3 341 782
- DE-A1- 10 132 319
- DE-C1- 4 342 870
- GB-A- 1 168 236
- JP-A- 2010 213 459

## Beschreibung

Die Erfindung betrifft eine elektrische Maschine mit einem stationären Stator und einem drehbeweglich gelagerten Rotor, wobei der Rotor zahlreiche Klauenpole aufweist, welchen eine Erregereinrichtung zur Erzeugung eines Erregerfelds zugeordnet ist. Die Erfindung betrifft weiterhin die Verwendung einer elektrischen Maschine.

### Stand der Technik

Elektrische Maschinen der eingangs genannten Art sind aus dem Stand der Technik bekannt. Sie weisen den Stator und den Rotor auf, wobei ersterer stationär angeordnet und letzterer bezüglich des Stators drehbeweglich gelagert ist. Der Rotor weist zahlreiche Klauenpole auf; die elektrische Maschine ist insoweit als Klauenpolmaschine ausgebildet. Der Rotor verfügt über einen Magnetkreis, welcher elektrisch erregt ist. Der Rotor weist also insoweit keine Permanentmagnete auf, sondern der Magnetkreis verfügt über wenigstens eine Erregerspule zur Erzeugung eines Magnetfelds. Daraus ergibt sich die Notwendigkeit, elektrischen Strom, insbesondere Gleichstrom, mit vorgegebener Stromstärke dem Rotor als Erregerstrom zur Verfügung zu stellen, um das Magnetfeld beziehungsweise Erregerfeld zu erzeugen.

Zur Einspeisung des elektrischen Stroms finden üblicherweise Schleifringe Verwendung, was grundsätzlich zur Folge hat, dass die elektrische Maschine nicht mehr wartungsfrei ist, weil die Schleifringe bei einem Betrieb der elektrischen Maschine verschleißen. Zusätzlich bedeutet dies, dass die Schleifringe in der Regel auswechselbar sein müssen, was konstruktive Einschränkungen bedingt. Eine bekannte Alternative zu derartigen Schleifringen ist die Erzeugung des Magnetfelds beziehungsweise Erregerfelds durch mitrotierende Gleichrichterschaltungen, welche an dem Rotor vorgesehen sind. Derartige Ausführungsformen eignen sich insbesondere für Generatoren größerer Bauart, beispielsweise zur Verwendung in einem Kraftwerk, sind jedoch zur Regelung des Drehmoments der elektrischen Maschine in einem motorischen Betrieb grundsätzlich ungeeignet. In einem motorischen Betrieb der elektrischen Maschine wird eine solche Regelung jedoch häufig vorausgesetzt. Die GB 1 168 236 A, DE 33 41 782 A1, JP 2010 213459 A, EP 0 394 528 A1, DE 43 42 870 C1 und die DE 101 32 319 A1 stellen gattungsgemäße Ausgestaltungen dar.

### Offenbarung der Erfindung

Die elektrische Maschine mit den Merkmalen des Anspruchs 1 weist dagegen den Vorteil auf, dass sie universell sowohl motorisch als auch generatorisch einsetzbar ist und trotz elektrisch erregtem Magnetkreis des Rotors nicht auf Verschleißteile zur Übertragung des Erregerstroms, wie beispielsweise die Schleifringe, angewiesen ist. Auch kann auf Permanentmagnete als Quelle der magnetischen Erregung verzichtet werden, welche häufig Werkstoffe aus der Familie der Seltenen Erden aufweisen. Dies wird erfindungsgemäß erreicht, indem Wirkenden der Klauenpole von dem Stator umgriffen sind oder den Stator umgreifen und ihre, den Wirkenden gegenüberliegenden Aufnahmeenden jeweils unmittelbar benachbart zu einem Magnetflussleiter der Erregereinrichtung angeordnet sind, wobei die Erregereinrichtung stationär ist. Die Klauenpole weisen ihre Haupterstreckung vorzugsweise in axialer Richtung der elektrischen Maschine, also im Wesentlichen parallel zu einer Drehachse des Rotors, auf. In axialer Richtung benachbart zueinander liegen entsprechend die Wirkenden und die Aufnahmeenden der Klauenpole. Dabei können die Wirkenden und die Aufnahmeenden jeweils unmittelbar aufeinanderstoßen oder alternativ durch einen Zwischenbereich in axialer Richtung voneinander beabstandet sein. Die Erfindung sieht vor, dass die den Wirkenden gegenüberliegenden Aufnahmeenden alternierend in radialer Richtung nach innen und nach außen zur Bildung einer Erregeraufnahme gespreizt sind, in welcher eine Erregereinrichtung angeordnet ist. Das bedeutet, dass die Aufnahmeenden benachbarter Klauenpole in radialer Richtung zueinander versetzt vorliegen. Zu diesem Zweck muss jedoch nicht notwendigerweise jeder Klauenpol beziehungsweise jedes Aufnahmeende in radialer Richtung eine andere Position aufweisen als das jeweils dazugehörige Wirkende. Es kann vielmehr vorgesehen sein, dass einige der Klauenpole in axialer Richtung gerade verlaufen, das jeweilige Wirkende also dieselbe Radialposition aufweist wie das jeweilige Aufnahmeende. Die benachbart zu diesen Klauenpolen vorliegenden Klauenpole weisen nun Aufnahmeenden auf, welche in radialer Richtung nach innen oder nach außen versetzt sind, sodass ihre Aufnahmeenden eine andere radiale Position einnehmen als ihre Wirkenden. Es ist also lediglich von Bedeutung, dass die Aufnahmeenden unmittelbar zueinander benachbarter Klauenpole in radialer Richtung gegeneinander derart versetzt sind, dass zwischen ihnen - im Querschnitt gesehen - die Erregeraufnahme vorliegt.

Auf diese Weise ist zwischen den Aufnahmeenden der benachbarten Klauenpole die Erregeraufnahme ausgebildet. Die Erregereinrichtung kann derart in der Erregeraufnahme angeordnet, dass sie wenigstens bereichsweise dieselbe Axialposition aufweist wie die Aufnahmeenden der Klauenpole, wobei sie jedoch in radialer Richtung zur Ausbildung von Luftspalten von diesen beabstandet sein kann. Weil die Aufnahmeenden der Klauenpole alternierend nach innen und nach außen gespreizt sind, liegen zwischen den Klauenpolen und der Erregereinrichtung zwei Luftspalte vor, welche in radialer Richtung voneinander beabstandet sind.

Die Erregereinrichtung ist Bestandteil des Magnetkreises und dient insoweit der Erzeugung des Erregerfelds der elektrischen Maschine. Die Erregereinrichtung ist vorzugsweise stationär, also insbesondere nicht gemeinsam mit dem Rotor drehbeweglich gelagert oder mit ihm wirkverbunden. Insoweit können die Klauenpole des Rotors über ein stromanschlussloses Rotorteil mit einer Welle der elektrischen Maschine wirkverbunden sein. Es sind entsprechend keine Kontaktelemente beziehungsweise Verschleißelemente, beispielsweise Schleifringe oder dergleichen, an dem Rotorteil vorgesehen, um an dem Rotor angebrachte Elemente mit Strom zu versorgen. Vielmehr muss lediglich die vorzugsweise stationäre Erregereinrichtung mit dem Erregerstrom beaufschlagt werden, um das Erregerfeld zu erzeugen. Die Erregereinrichtung arbeitet dabei mit den Klauenpolen beziehungsweise deren Aufnahmeenden zusammen, um einen magnetischen Schluss bereitzustellen.

Der Magnetflussleiter der Erregereinrichtung ist dazu vorgesehen, den mittels der Erregerspule erzeugten Magnetfluss in Umfangsrichtung zu führen und gleichmäßig auf die Klauenpole des Rotors zu verteilen. Der Magnetflussleiter ist dabei vorzugsweise einstückig, besteht also nicht aus mehreren, aufeinanderliegenden Lamellen beziehungsweise liegt nicht als geschichteter Kern vor. Er besteht insoweit aus einem massiven magnetisierbaren Material, beispielsweise aus Eisen. Der Magnetflussleiter ist bevorzugt ringförmig, insbesondere kreisringförmig.

Die Wirkenden der Klauenpole weisen ein erstes freies Ende der Klauenpole auf, während die Aufnahmeenden ein zweites, dem ersten freien Ende gegenüberliegendes freies Ende umfassen. Die Wirkenden sind nun derart angeordnet, dass sie von dem Stator umgriffen sind oder alternativ ihrerseits den Stator umgreifen, wobei unter Umgreifen ein in Umfangsrichtung wenigstens teilweises, vorzugsweise vollständiges, Umgreifen gemeint ist. Die Aufnahmeenden sollen dagegen unmittelbar benachbart zu dem Magnetflussleiter vorliegen. Das bedeutet, dass beispielsweise das zweite freie Ende der Klauenpole in Richtung des Magnetflussleiters oder umgekehrt ein freies Ende des Magnetflussleiters in Richtung des Aufnahmeendes weist. Zwischen dem Magnetflussleiter und dem Aufnahmeende liegt dabei jeweils ein Luftspalt vor, welcher derart bemessen ist, dass er zwar den Magnetflussleiter und die Klauenpole berührungsfrei beabstandet, jedoch einen ausreichenden, vorzugsweise maximalen, Magnetfluss zulässt.

Die hier beschriebene Ausführungsform eignet sich insbesondere für fremderregte Synchronmaschinen, die elektrische Maschine ist insoweit vorzugsweise als eine solche ausgebildet. Entsprechend ist sie auch im Teillastbereich und bei hohen Drehzahlen problemlos verwendbar. Die dazu erforderliche Felschwächung benötigt im Gegensatz zu permanenterregten elektrischen Maschinen keine zusätzliche Energie zur Kompensation der Permanenterregung, sondern kann durch Verringerung des Erregerstroms dargestellt werden. Weil die Anzahl der Klauenpole prinzipiell beliebig wählbar ist, lassen sich elektrische Maschinen auslegen, die sehr hohe Drehmomente erzeugen können.

Eine Weiterbildung der Erfindung sieht vor, dass die Klauenpole separat voneinander als Gleichteile vorliegen und zur Ausbildung des Rotors wenigstens bereichsweise in einen gemeinsamen Träger eingebettet sind. Bei bekannten elektrischen Maschinen besteht der Rotor aus massivem Material, an oder in welchem die Klauenpole ausgebildet sind. Eine solche Ausbildung bedingt jedoch sehr große Abmessungen. Um die vorstehend beschriebene Ausführungsform zu realisieren ist es daher besonders vorteilhaft, wenn alle Klauenpole als einzelne, voneinander getrennte Bauteile vorliegen, welche denselben Aufbau aufweisen. Die Herstellung der Klauenpole als Gleichteile ist äußerst kostengünstig möglich. Erst nachfolgend werden die Klauenpole während der Herstellung der elektrischen Maschine in den Träger eingebettet und so der Rotor ausgebildet. Der Träger kann auch als Rotormatrix bezeichnet werden und besteht aus einem Trägermaterial, beispielsweise einem Kunststoff. Insbesondere liegt der Träger also materialuneinheitlich zu den Klauenpolen vor. Er wird vorzugsweise in einem Spritzgießverfahren hergestellt, wobei die Klauenpole wenigstens teilweise eingegossen werden. In dem fertigen Rotor sollen die Klauenpole wenigstens bereichsweise in dem Träger eingebettet vorliegen.

Eine Weiterbildung der Erfindung sieht vor, dass die Erregereinrichtung eine Erregerspule mit wenigstens einer in Umfangsrichtung verlaufenden Erregerwicklung aufweist. Die elektrische Maschine ist insoweit als Transversalflussmaschine ausgebildet, weil die Erregerwicklung als Umfangswicklung ausgebildet ist. Der magnetische Fluss, welcher vorliegt, wenn die Erregerwicklung von elektrischem Strom durchflossen ist, verläuft senkrecht zu einer Drehrichtung des Rotors, liegt also insoweit in einer Ebene, in welcher auch die Drehachse des Rotors liegt.

Eine Weiterbildung der Erfindung sieht vor, dass zwei unmittelbar benachbarte Klauenpole und der Magnetflussleiter die Erregerspule wenigstens bereichsweise, insbesondere vollständig, umgreifen. Auf diese Weise wird der magnetische Hauptschluss hergestellt und gleichzeitig die stationäre Anordnung der Erregereinrichtung ermöglicht. Beispielsweise verlaufen die Klauenpole und der Magnetflussleiter - im Längsschnitt gesehen - um die Erregerspule herum. Der Längsschnitt liegt in einer (gedachten) Ebene, welche die Längsachse beziehungsweise Drehachse der elektrischen Maschine vollständig aufnimmt. Es ist dabei jedoch nicht notwendig, dass die Klauenpole und der Magnetflussleiter einer solchen gemeinsamen Ebene liegen. Vielmehr wird darauf abgestellt, dass die zwei unmittelbar zueinander benachbarten Klauenpole gemeinsam mit dem Magnetflussleiter - wiederum im Längsschnitt gesehen - eine Erregeraufnahme bilden, in welcher die Erregerspule angeordnet ist. Vorzugsweise ist die Erregerspule vollständig von der Erregeraufnahme aufgenommen.

Eine Weiterbildung der Erfindung sieht vor, dass der Stator und die Erregereinrichtung in axialer Richtung benachbart oder mit Überdeckung angeordnet sind. Die Erregereinrichtung ist wenigstens bereichsweise in der Erregeraufnahme angeordnet, welche von den Aufnahmeenden der Klauenpole gebildet ist. Die den Aufnahmeenden bezüglich der Klauenpole gegenüberliegenden Wirkenden sind dagegen dem Stator zugeordnet. Entsprechend liegen der Stator und die Erregereinrichtung in axialer Richtung benachbart zueinander, vorzugsweise voneinander beabstandet, vor. Dabei kann es vorgesehen sein, dass der Stator in radialer Richtung wenigstens bereichsweise von der Erregereinrichtung überdeckt ist, sodass Stator und Erregereinrichtung wenigstens bereichsweise an derselben radialen Position bezüglich der Drehachse des Rotors vorliegen. Vorzugsweise liegen sowohl der Stator als auch die Erregereinrichtung im Wesentlichen in Ringform beziehungsweise Kreisringform vor. Die Abmessungen der entsprechenden Kreisringe sollen nun zumindest ähnlich sein, sodass der Stator - in radialer Richtung gesehen - nicht vollständig von der Erregereinrichtung oder umgekehrt aufgenommen werden kann. Vielmehr stimmen insbesondere die Außendurchmesser des Stators und der Erregereinrichtung, insbesondere des Magnetflussleiters, im Wesentlichen überein.

Alternativ kann es jedoch auf vorgesehen sein, dass der Stator und die Erregereinrichtung in axialer Richtung mit Überdeckung angeordnet sind. Das bedeutet, dass die beiden Elemente entsprechende Abmessungen in radialer Richtung aufweisen, sodass eines der Elemente das jeweils andere der Elemente aufnehmen kann. Bei der vorstehend beschriebenen Ringform ist also der Außendurchmesser der Erregereinrichtung in radialer Richtung kleiner als der Innendurchmesser des Stators oder umgekehrt. Die beiden Elemente weisen entsprechend wenigstens teilweise dieselben Axialpositionen auf und überdecken sich demnach in axialer Richtung.

Eine Weiterbildung der Erfindung sieht vor, dass der Magnetflussleiter in radialer Richtung nach innen und/oder nach außen über die Erregerspule übersteht und freie Enden der Aufnahmeenden wenigstens eines Teils der Klauenpole zumindest bereichsweise von dem Magnetflussleiter in radialer Richtung überdeckt sind. Die freien Enden der Klauenpole beziehungsweise der Aufnahmeenden treten entsprechend auf den Magnetflussleiter zu beziehungsweise sind diesem entgegengerichtet. Dabei liegen der Magnetflussleiter und die freien Enden an wenigstens einer gemeinsamen Radialposition vor. Sie sind entsprechend nicht in radialer Richtung voneinander beabstandet.

Eine Weiterbildung der Erfindung sieht vor, dass in Umfangsrichtung zwischen den Wirkenden der Klauenpole jeweils ein Sperrmagnet vorgesehen ist. Die Sperrmagnete dienen der Minimierung von Streuverlusten zwischen den Klauenpolen der elektrischen Maschine im Bereich des Luftspalts zwischen dem Stator und den Wirkenden der Klauenpole. Liegen die Klauenpole nicht in massiver Form, sondern lamelliert, also als Lamellenbündel beziehungsweise in geschichteter Form, vor, so können als Sperrmagnete kostengünstige Ferritmagnete verwendet werden.

Eine Weiterbildung der elektrischen Maschine sieht ein Planetengetriebe vor, welches ein Sonnenrad, ein Hohlrad und einen Planetenträger mit wenigstens einem eine Wirkverbindung zwischen Sonnenrad und Hohlrad herstellenden Planetenrad aufweist, wobei der Rotor mit dem Sonnenrad, dem Hohlrad oder dem Planetenträger drehfest wirkverbunden ist. Die hier vorgestellte elektrische Maschine eignet sich insbesondere für den Einsatz in Radnabenantrieben beziehungsweise Einzelradantrieben eines Fahrzeugs. Das Fahrzeug ist beispielsweise ein elektrisch betriebenes Moped oder Motorrad, insbesondere ein elektrisch betriebener Roller. Die elektrische Maschine kann jedoch auch in Stellantrieben, wie beispielsweise einem Scheibenwischerantrieb, einem Bettenversteller und dergleichen Einsatz finden. Wird das Planetengetriebe in die elektrische Maschine integriert, so eignet diese sich insbesondere für Anwendungen, die eine hohe Spreizung zwischen Anfahrmoment und Maximalmoment bei gleichzeitig hohem Wirkungsgrad benötigen, insbesondere im Teillastbereich und im Feldschwächebereich. Der Rotor der elektrischen Maschine ist bei einer derartigen Ausführungsform mit dem Sonnenrad, dem Hohlrad oder dem Planetenträger drehfest wirkverbunden, treibt das entsprechende Rad beziehungsweise den Planetenträger also unmittelbar an.

Ferner kann vorgesehen sein, dass die Erregerspule an dem Magnetflussleiter der Erregereinrichtung angeordnet ist. Vorzugsweise schließt sich die Erregerspule in axialer Richtung an den Magnetflussleiter an oder wird - im Längsschnitt gesehen - wenigstens bereichsweise von diesem aufgenommen. Die Erregerspule weist bevorzugt dieselbe Form auf wie der Magnetflussleiter.

Auch kann vorgesehen sein, dass der Stator aus einer Vielzahl von Spulen oder Permanentmagneten besteht. Die elektrische Maschine kann insoweit entweder fremderregt oder permanenterregt sein. Von Vorteil ist dabei stets, dass ein elektrisch erregter Rotor vorliegt, ohne dass an diesem Verschleißteile zur Sicherstellung von seiner Stromversorgung vorgesehen sein müssen. Die Spulen des Stators können prinzipiell beliebig ausgestaltet sein. Weist der Stator die Permanentmagnete auf, ist die elektrische Maschine also permanenterregt, so wird die Erregung des Magnetkreises des Rotors mittels der Erregereinrichtung sinusförmig durchgeführt, wodurch eine einfach ansteuerbare, permanenterregte elektrische Maschine dargestellt wird. Der Aufbau des Rotors bleibt unverändert.

Schließlich kann vorgesehen sein, dass die Klauenpole jeweils aus einer Vielzahl von parallel zueinander angeordneten Lamellen bestehen. Anders ausgedrückt sind die Klauenpole lamelliert beziehungsweise bestehen aus einem geschichteten Blech, wie es beispielsweise auch häufig in Transformatoren zum Einsatz kommt. Auf diese Weise ist es, wie bereits vorstehend erwähnt, möglich, kostengünstige Ferritmagnete als Sperrmagnete einzusetzen und zudem die Verlustleistung der elektrischen Maschine zu reduzieren.

Die Erfindung betrifft weiterhin die Verwendung einer elektrischen Maschine gemäß den vorstehenden Ausführungen in einem Radnabenantrieb oder Einzelradantrieb eines Fahrzeugs. Die elektrische Maschine kann dabei gemäß den vorstehenden Ausführungen weitergebildet sein. Die Erfindung betrifft insoweit also auch ein Fahrzeug mit einem Radnabenantrieb oder einem Einzelradantrieb, wobei der Radnabenantrieb beziehungsweise Einzelradantrieb eine elektrische Maschine gemäß den vorstehenden Ausführungen aufweist.

Die Erfindung betrifft zudem ein Verfahren zum Herstellen einer elektrischen Maschine, insbesondere gemäß den vorstehenden Ausführungen. Alle Klauenpole der elektrischen Maschine werden dabei als Gleichteile hergestellt oder bereitgestellt und anschließend zum Ausbilden eines Rotors in einen gemeinsamen Träger beziehungsweise eine Rotormatrix eingebettet. Durch das Vorliegen aller Klauenpole als Gleichteile ist eine äußerst einfache und kostengünstige Herstellung der elektrischen Maschine möglich. Vor dem Einbetten in den Träger werden die Klauenpole vorzugsweise in Umfangsrichtung zueinander beabstandet angeordnet, es liegt also kein Berührkontakt zwischen unmittelbar benachbarten Klauenpolen vor.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine erste Ansicht einer elektrischen Maschine mit einem integrierten Planetengetriebe,
- Figur 2: einen Längsschnitt durch die aus der Figur 1 bekannte elektrische Maschine,
- Figur 3: eine schematische Darstellung der elektrischen Maschine, wobei ein Stator und ein Rotor mit einer letzterem zugeordneten Erregereinrichtung dargestellt sind,
- Figur 4: einen Magnetflussleiter der Erregereinrichtung,
- Figur 5: den Magnetflussleiter und eine an diesem vorgesehene Erregerspule der Erregereinrichtung,
- Figur 6: die aus den Figuren 4 und 5 bekannte Erregereinrichtung sowie Klauenpole des Rotors mit Wirkenden und Aufnahmeenden, wobei letztere in radialer Richtung nach innen und nach außen zur Bildung einer Erregeraufnahme für die Erregereinrichtung gespreizt sind,
- Figur 7: die Erregereinrichtung, die Klauenpole und einen Bereich des Stators, wobei letzterer die Wirkenden des Rotors wenigstens bereichsweise umgreift,
- Figur 8: eine schematische Darstellung der Klauenpole des Stators,
- Figur 9: die aus der Figur 8 bekannten Klauenpole, wobei zusätzlich Bereiche des Stators und eine Erregerwicklung der Erregereinrichtung dargestellt sind,
- Figur 10: die aus der Figur 9 bekannten Elemente, wobei zusätzlich ein Magnetflussleiter der Erregereinrichtung gezeigt ist,
- Figur 11: eine schematische Darstellung eines magnetischen Flusses im Querschnitt der elektrischen Maschine,
- Figur 12: eine schematische Darstellung des magnetischen Flusses im Längsschnitt durch die elektrische Maschine, und
- Figuren 13 bis 18: alternative Ausführungsformen der elektrischen Maschine, jeweils in einem schematischen Längsschnitt.

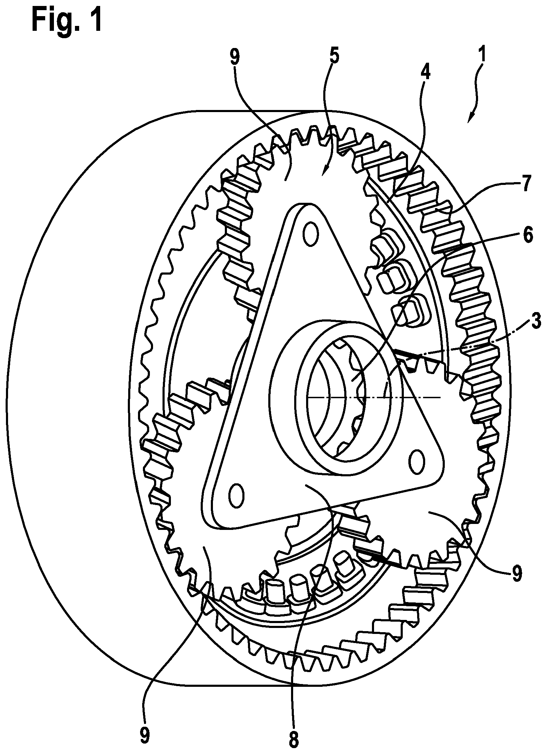

Die Figur 1 zeigt eine erste Ansicht einer elektrischen Maschine 1 mit einem hier nicht sichtbaren Stator 2 und einem bezüglich einer Drehachse 3 drehbeweglich gelagerten Rotor 4. Der Rotor 4 ist mit einem Planetengetriebe 5 wirkverbunden, welche ein Sonnenrad 6, ein Hohlrad 7 und einen Planetenträger 8 mit drei Planetenrädern 9 aufweist. Die hier dargestellte Anzahl der Planetenräder 9 ist rein beispielhaft gewählt. Die Planetenräder 9 stellen eine Wirkverbindung zwischen dem Sonnenrad 6 und dem Hohlrad 7 her. Der Rotor 4 ist in der hier dargestellten Ausführungsform unmittelbar mit dem Sonnenrad 6 wirkverbunden, treibt über dieses also die Planetenräder 9 beziehungsweise den Planetenträger 8 und das Hohlrad 7 an.

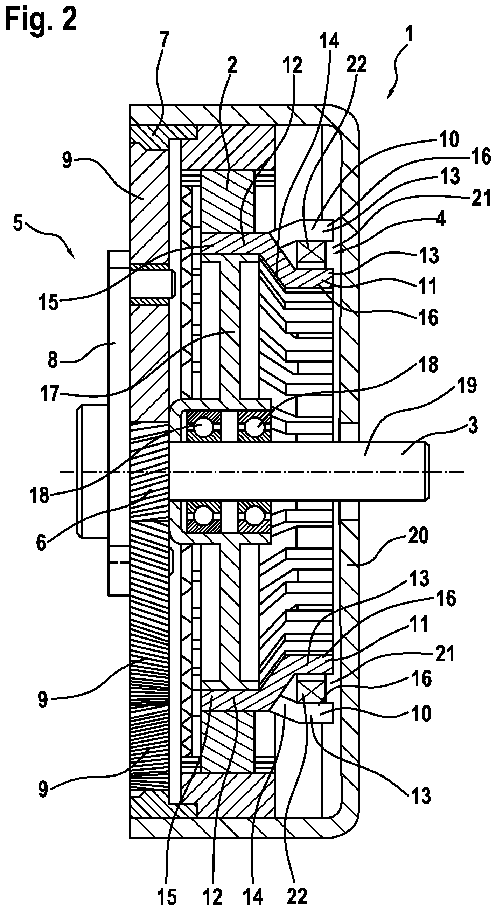

Die Figur 2 zeigt einen Längsschnitt durch die elektrische Maschine 1 mit dem Planetengetriebe 5. Es wird deutlich, dass der Rotor 4 mehrere Klauenpole 10 und 11 aufweist. Es sind dabei jeweils mehrere Klauenpole 10 und 11 vorgesehen, welche stets unmittelbar benachbart zueinander angeordnet sind. Zwischen zwei Klauenpolen 10 ist somit jeweils ein Klauenpol 11 und umgekehrt vorgesehen. Die Klauenpole 10 können als erste Klauenpole und die Klauenpole 11 als zweite Klauenpole bezeichnet werden. Die Klauenpole 10 und 11 bestehen aus Wirkenden 12 und Aufnahmeenden 13. In axialer Richtung kann zwischen den Wirkenden 12 und den Aufnahmeenden 13 jeweils ein Zwischenbereich 14 vorliegen, welcher die Wirkenden 12 und die Aufnahmeenden 13 in axialer Richtung voneinander beabstandet. Es wird deutlich, dass die Wirkenden 12 in der hier dargestellten Ausführungsform in Umfangsrichtung von dem Stator 2 vollständig umgriffen sind. Alternativ kann es jedoch auch vorgesehen sein, dass der Stator 2 von den Wirkenden 12 in Umfangsrichtung umgriffen ist.

Die Wirkenden 12 weisen ein erstes freies Ende 15 der Klauenpole 10 und 11 auf, während die Aufnahmeenden 13 ein zweites freies Ende 16 umfassen. Die freien Enden 15 und 16 beziehungsweise die Wirkenden 12 und die Aufnahmeenden 13 sind an in axialer Richtung gegenüberliegenden Seiten der Klauenpole 10 und 11 vorgesehen. Im Bereich der Wirkenden 12 sind die Klauenpole 10 und 11 an einem Rotorteil 17 befestigt. In dem vorliegenden Ausführungsbeispiel ist das Rotorteil 17 mittels zweier Kugellager 18 auf einer zentralen Welle 19 der elektrischen Maschine 1 drehbeweglich gelagert. Über das Rotorteil 17 ist auch die Wirkverbindung zu dem Sonnenrad 6 des Planetengetriebes 5 hergestellt. Die Welle 19 dient insofern der Befestigung der elektrischen Maschine 1 beziehungsweise des Stators 2. Die Welle 19 kann drehbeweglich oder starr an einem Gehäuse 20 der elektrischen Maschine 1 gelagert sein. An dem Gehäuse 20 ist das Hohlrad 7 des Planetengetriebes 5 befestigt. Der Stator 2 ist ebenfalls an dem Gehäuse 20 befestigt.

Die Figur 2 zeigt, dass die Aufnahmeenden 13 der Klauenpole 10 und 11 alternierend in radialer Richtung nach innen und nach außen gespreizt sind. Dabei sind die Aufnahmeenden 13 der Klauenpole 10 in radialer Richtung nach außen und die Aufnahmeenden 13 der Klauenpole 11 in radialer Richtung nach innen versetzt (bezüglich der jeweiligen Wirkenden 12). Von Bedeutung ist jedoch grundsätzlich lediglich, dass die Aufnahmeenden 13 jeweils benachbarter Klauenpole 10 und 11 in radialer Richtung voneinander beabstandet sind. Zwischen den Aufnahmeenden 13 der Klauenpole 10 und 11 ist dadurch eine Erregeraufnahme 21 gebildet, in welcher eine Erregereinrichtung 22 wenigstens bereichsweise angeordnet ist.

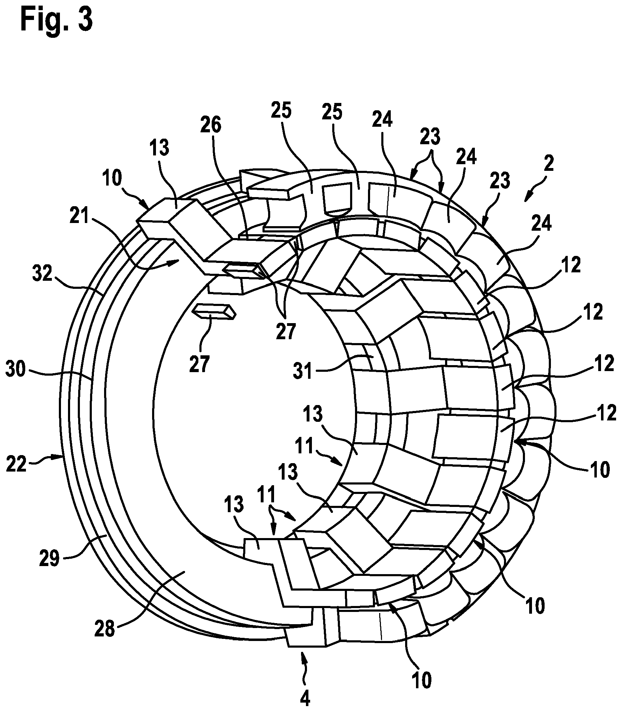

Die Figur 3 zeigt eine schematische Ansicht eines Bereichs des Stators 2 und des Rotors 4. Der Stator 2 besteht aus Elektromagneten 23, von welchen lediglich einige beispielhaft gekennzeichnet sind. Die Elektromagnete 23 verfügen über Spulen 24 und Magnetkerne 25. Die genannten Elemente sind in der Figur 3 ebenfalls lediglich rein beispielhaft angedeutet. Der Rotor 4 besteht aus den bereits angeführten Klauenpolen 10 und 11, wobei die Aufnahmeenden 13 der Klauenpole 10 in radialer Richtung nach außen und die Aufnahmeenden 13 der Klauenpole 11 in radialer Richtung nach innen gespreizt sind, sodass die Erregeraufnahme 21 vorliegt. Die Klauenpole 10 und 11 sind in Umfangsrichtung voneinander beabstandet, wobei in den dadurch ausgebildeten Spalten 26 Sperrmagnete 27 vorliegen.

Die Erregereinrichtung 22, welche bereichsweise in der Erregeraufnahme 21 angeordnet ist, besteht aus einer Erregerspule 28 und einem Magnetflussleiter 29. Die Erregerspule 28 weist wenigstens eine Erregerwicklung, üblicherweise jedoch eine Vielzahl von in Umfangsrichtung verlaufenden Erregerwicklungen auf, welche hier nicht im Einzelnen dargestellt sind. Durch den Verlauf der Erregerwicklung in Umfangsrichtung ist die elektrische Maschine 1 als Transversalflussmaschine ausgebildet. Der magnetische Fluss, welcher mittels der Erregerspule 28 erzeugt wird, liegt also in einer Ebene, in welcher auch die Drehachse 3 aufgenommen ist. Die Erregerspule 28 ist in einer Aufnahme 30 des Magnetflussleiters 29 aufgenommen. Die Aufnahme 30 wird von zwei in Umfangsrichtung umlaufenden Axialstegen 31 und 32 gebildet, welche sich ausgehend von einem Grundkörper des Magnetflussleiters 29 in axialer Richtung erstrecken. Die beiden Axialstege 31 und 32 übergreifen dabei die Erregerspule 28 in axialer Richtung lediglich teilweise. Der Magnetflussleiter 29 kann Teil des in der Figur 2 gezeigten Gehäuses 20 oder an diesem befestigt sein.

Sowohl der Magnetflussleiter 29 als auch die Erregerspule 28 sind kreisringförmig. Der Magnetflussleiter 29 überragt dabei die Erregerspule 28 in radialer Richtung sowohl nach innen als auch nach außen. Auf diese Weise überdeckt der Magnetflussleiter 29 die freien Enden 16 der Klauenpole 10 und 11 in radialer Richtung wenigstens bereichsweise, vorzugsweise vollständig, wobei in axialer Richtung ein Luftspalt zwischen ihnen vorliegt. Die Klauenpole 10 und 11 bestehen jeweils aus einer Vielzahl von parallel zueinander angeordneten Lamellen, welche hier nicht im Einzelnen dargestellt sind. Die Klauenpole 10 und 11 liegen insoweit als geschichtete Bleche beziehungsweise Blechkerne vor. Der Magnetflussleiter 29 besteht dagegen aus massivem Material, ist also einstückig ausgebildet. Das Material ist magnetisierbar. Beispielsweise wird Eisen verwendet.

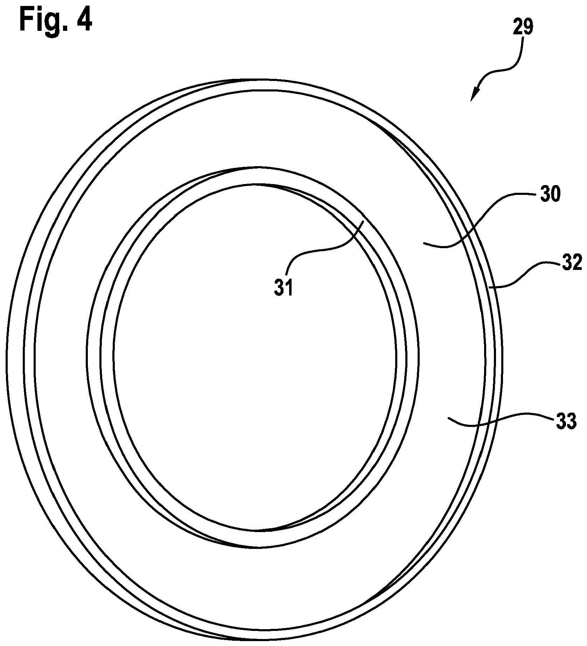

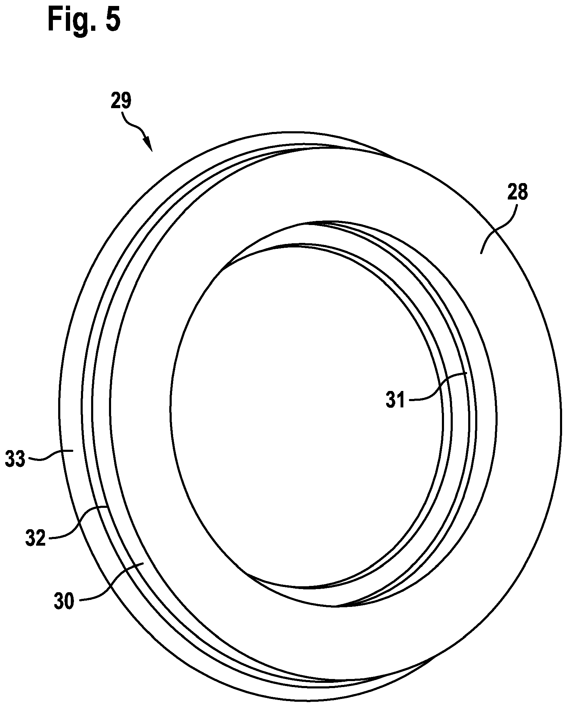

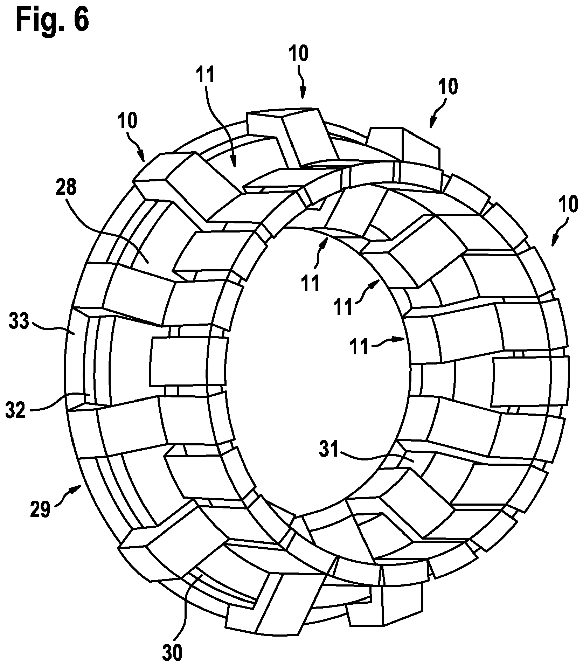

Die Figur 4 zeigt eine Ansicht des Magnetflussleiters 29. In diesem ist die Aufnahme 30 für die Erregerspule 28 (hier nicht dargestellt) ausgebildet. Zu diesem Zweck erstrecken sich in axialer Richtung die beiden Axialstege 31 und 32 ausgehend von einem Grundkörper 33. Die Figur 5 zeigt die Erregerspule 28 in der Aufnahme 30 des Magnetflussleiters 29, während die Figur 6 die aus der Figur 5 bekannten Elemente darstellt, wobei zusätzlich die Klauenpole 10 und 11 abgebildet sind.

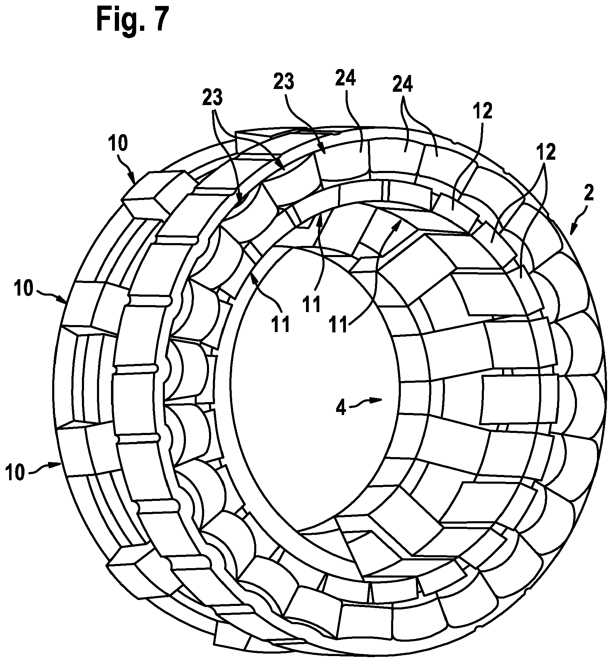

In der Darstellung der Figur 7 sind die Klauenpole 10 und 11 in einen Träger beziehungsweise eine Rotormatrix eingebettet, bestehend beispielsweise aus Kunststoff, welche die Klauenpole 10 und 11 zur Ausbildung eines Bereichs des Rotors 4 aneinander befestigt. Die Rotormatrix ist beispielsweise durch Spritzgießen hergestellt, wobei die Klauenpole 10 und 11 vorzugsweise umgossen werden. Nach der Herstellung der Rotormatrix kann eine Weiterbearbeitung beispielsweise mit spanenden Verfahren erfolgen. Auch die Sperrmagnete 27 können in die Rotormatrix eingebettet sein. Der Stator 2 ist mit seinen Elektromagneten 23 derart angeordnet, dass er die Wirkenden 12 des Rotors 4, gebildet von den Klauenpolen 10 und 11 in Umfangsrichtung vollständig umgreift. Dabei liegt zwischen dem Stator 2 und den Wirkenden 12 des Rotors 4 in radialer Richtung ein Luftspalt vor, welcher hier nicht gekennzeichnet ist. Es soll nochmals darauf hingewiesen werden, dass die Erregereinrichtung 22 ebenso wie der Stator 2 ortsfest ist, sich also nicht gemeinsam mit dem Rotor 4 bei einem Betrieb der elektrischen Maschine 1 dreht.

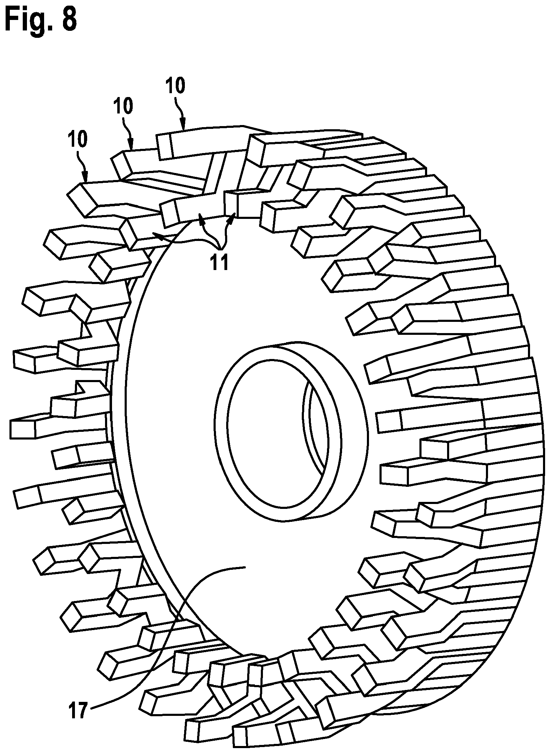

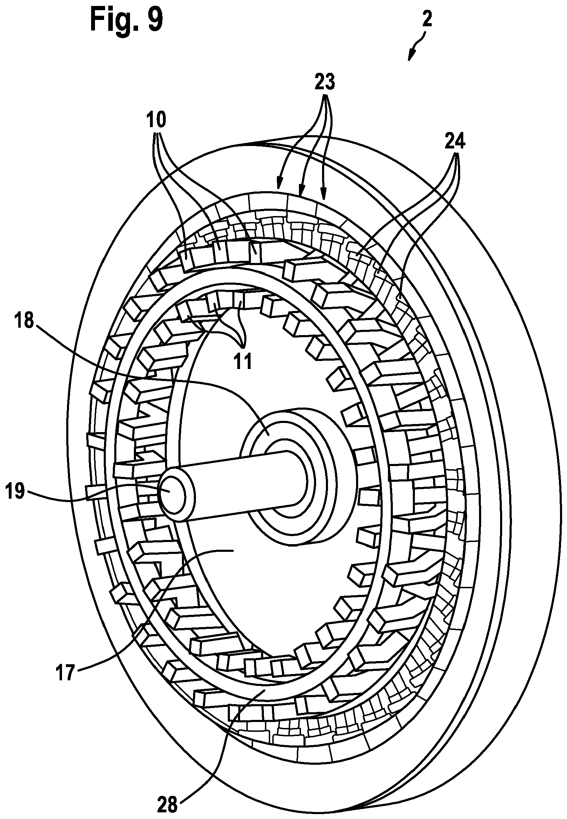

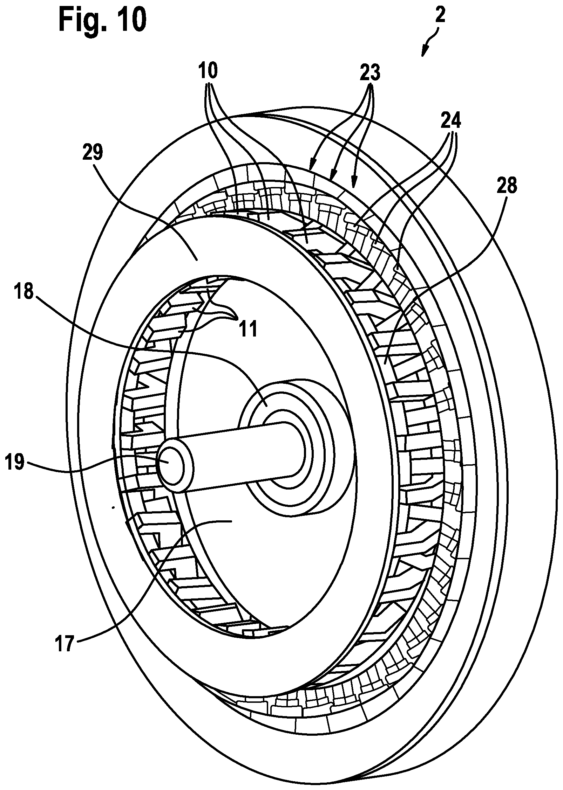

Die Figur 8 zeigt die Klauenpole 10 und 11 sowie das Rotorteil 17 in einer alternativen Ansicht. Es soll darauf hingewiesen werden, dass prinzipiell beliebig viele Klauenpole 10 und 11 vorgesehen sein können. Die Figur 9 zeigt die aus der Figur 8 bekannte Anordnung, wobei zusätzlich der Stator 2 mit den Elektromagneten 23 und die Erregerspule 28 abgebildet sind. Weiterhin ist die Welle 19 zu erkennen, auf welche das Rotorteil 17 mittels Kugellagern 18 drehbar gelagert ist. Alternativ sind auch Ausführungsformen mit nur einem Kugellager 18 realisierbar. Die Figur 10 zeigt eine Ansicht, in welcher die aus der Figur 9 bekannten Elemente um den Magnetflussleiter 29 ergänzt wurden.

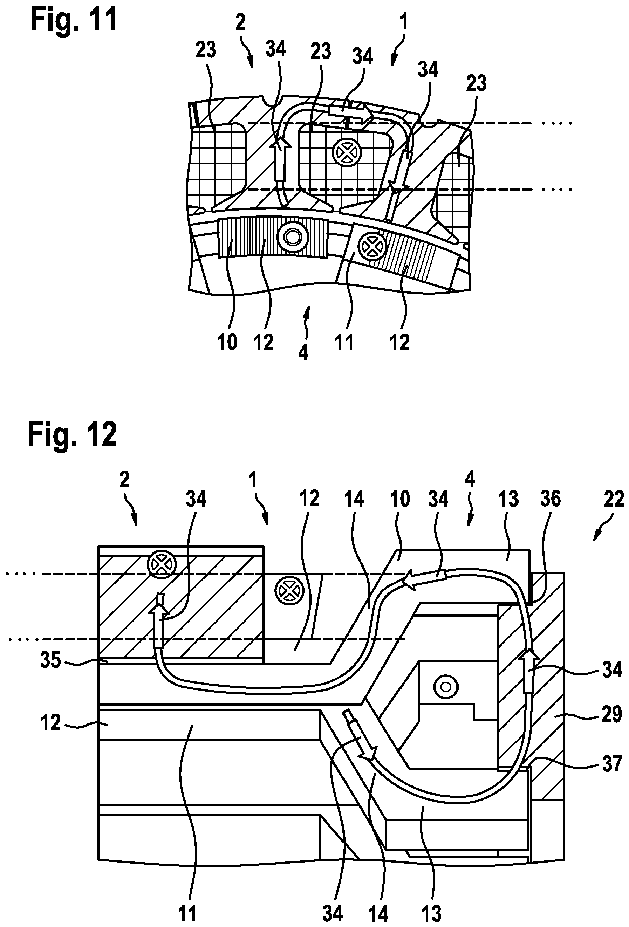

Die Figur 11 zeigt einen Bereich eines Querschnitts durch die elektrische Maschine 1 im Bereich des Stators 2 und dessen Spulen 24. Dargestellt ist auch eine rein beispielhafte Anordnung der Wirkenden 12 zweier Klauenpole 10 und 11 des Rotors 4. Angedeutet ist in dieser Darstellung der magnetische Fluss beziehungsweise Hauptfluss, wie er in der vorstehend beschriebenen elektrischen Maschine 1 auftritt (Pfeile 34).

Die Figur 12 zeigt schließlich einen Längsschnitt durch die elektrische Maschine 1, wobei wiederum Bereiche des Stators 2 und des Rotors 4 zu erkennen sind. Zusätzlich ist auch ein Bereich der Erregereinrichtung 22, nämlich der Magnetflussleiter 29, abgebildet. Die Erregerspule 28 ist aus Gründen der Übersichtlichkeit nicht dargestellt. In dieser Darstellung geben wiederum die Pfeile 34 den Verlauf des magnetischen Flusses an. Demnach tritt der magnetische Fluss aus dem Stator 2 über das Aufnahmeende 13 in den Klauenpol 11 ein und gelangt über den Zwischenbereich 14 beziehungsweise unmittelbar in das Wirkende 12 des Klauenpols 11. Von dort aus gelangt er über den Magnetflussleiter 29 in das Wirkende 12 des Klauenpols 10 und über dessen Aufnahmeende 13 wieder in den Stator 2.

In dieser Darstellung ist gut zu erkennen, dass in der elektrischen Maschine 1 wenigstens drei Luftspalte vorliegen. Ein erster Luftspalt 35 liegt zwischen Stator 2 und den Klauenpolen 10 und 11 des Rotors 4 vor. Der Luftspalt 35 beabstandet diese Elemente in radialer Richtung voneinander. Weitere Luftspalte 36 und 37 liegen zwischen dem Magnetflussleiter 29 und den Klauenpolen 10 beziehungsweise den Klauenpolen 11 vor. Dabei sind diese Luftspalte 35 bis 37 dem magnetischen Hauptfluss zuzuordnen. Weitere Luftspalte können in einem magnetischen Nebenfluss vorliegen.

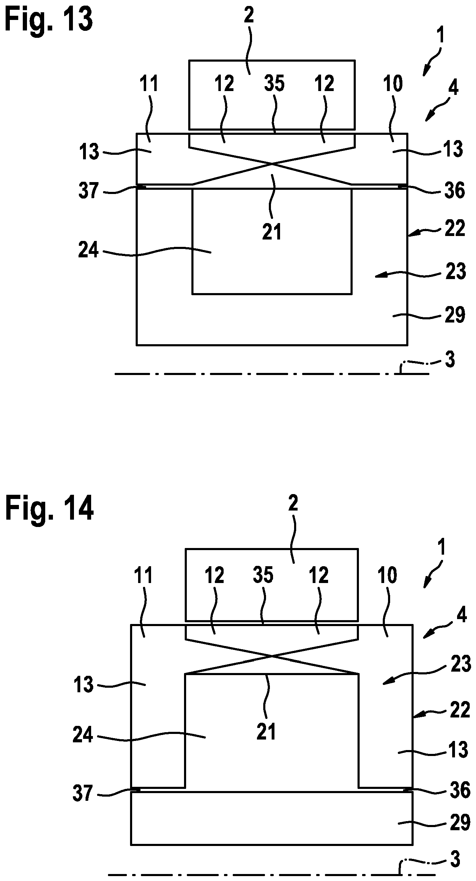

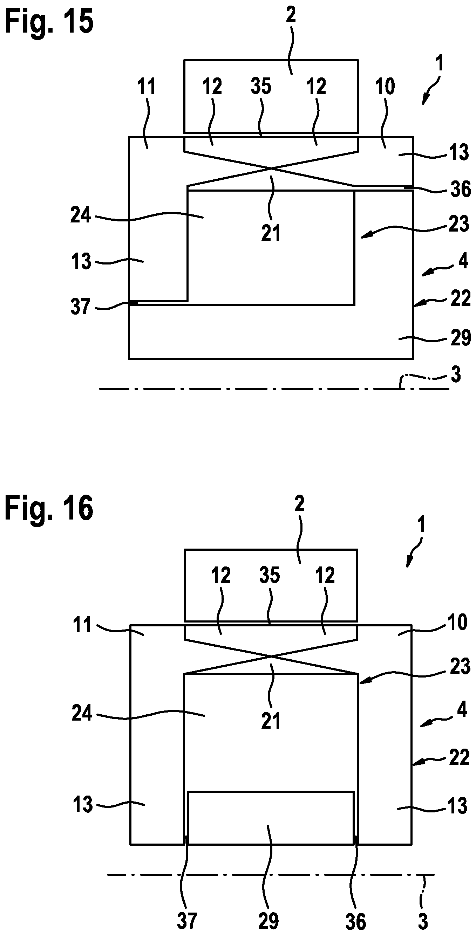

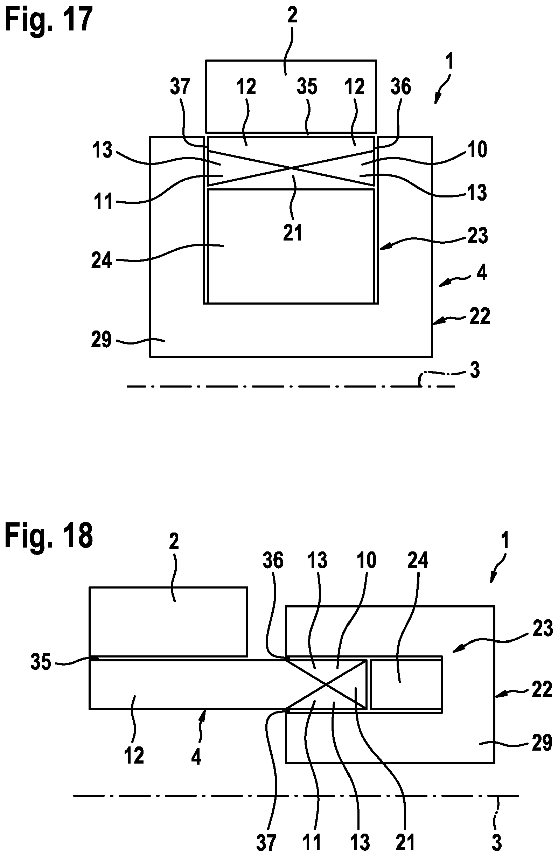

Die Figuren 13 bis 18 zeigen weitere Ausführungsformen der elektrischen Maschine 1. Gezeigt ist jeweils ein Längsschnitt durch die elektrische Maschine 1 entlang der Drehachse 3. In den Figuren ist deutlich zu sehen, dass die den Wirkenden gegenüberliegenden Aufnahmeenden jeweils unmittelbar benachbart zu dem Magnetflussleiter 29 der Erregereinrichtung 22 angeordnet sind. Dabei liegen die bereits beschriebenen Luftspalte 35 bis 37 vor. Grundsätzlich weisen die hier gezeigten Ausführungsformen einen ähnlichen Aufbau wie die anhand der Figuren 1 bis 12 beschriebe Ausführungsform auf. Insoweit wird auf die vorstehenden Ausführungen Bezug genommen. Der Unterschied liegt insbesondere in der Anordnung des Stators 2 zu der Erregereinrichtung 22. In den in den Figuren 13 bis 17 gezeigten Ausführungsformen ist die Erregereinrichtung 22 in axialer Richtung überlappend zu dem Stator 2 vorgesehen. Zu diesem Zweck ist der Stator 2 beispielsweise ringförmig, insbesondere kreisringförmig, und nimmt die Erregereinrichtung 22 in seiner zentralen Ausnehmung auf. Dies gilt auch für die Ausführungsform der Figur 18, hier ist jedoch zusätzlich eine Beabstandung in axialer Richtung vorgesehen.

Die Wirkenden 12 der Klauenpole 10 und 11 weisen für die Ausführungsformen der Figuren 13 bis 17 in entgegengesetzte Richtungen, während dies bei den Ausführungsformen der Figuren 1 bis 12 und 18 nicht der Fall ist. Bei letzteren weisen die Wirkenden 12 der Klauenpole 10 und 11 vielmehr in dieselbe Richtung. Stets kann jedoch eine Verjüngung der Klauenpole 10 und 11 in Richtung des freien Endes 15 beziehungsweise des Wirkendes 12 vorgesehen sein. Allen Ausführungsformen der Figuren 13 bis 18 ist gemeinsam, dass unmittelbar benachbarte Klauenpole 10 sowie 11 und der Magnetflussleiter 29 die Erregerspule 28 - abgesehen von den Luftspalten 36 und 37 umgreifen, insbesondere vollständig.

## Patentansprüche

1. Elektrische Maschine (1) mit einem stationären Stator (2) und einem drehbeweglich gelagerten Rotor (4), wobei der Rotor (4) zahlreiche Klauenpole (10,11) aufweist, welchen eine Erregereinrichtung (22) zur Erzeugung eines Erregerfelds zugeordnet ist, wobei Wirkenden (12) der Klauenpole (10,11) von dem Stator (2) umgriffen sind oder den Stator (2) umgreifen und ihre den Wirkenden (12) gegenüberliegenden Aufnahmeenden (13) jeweils unmittelbar benachbart zu einem Magnetflussleiter (29) der Erregereinrichtung (22) angeordnet sind, wobei die Erregereinrichtung (22) stationär ist, **dadurch gekennzeichnet, dass** die den Wirkenden (12) gegenüberliegenden Aufnahmeenden (13) alternierend in radialer Richtung nach innen und nach außen zur Bildung einer Erregeraufnahme (21) gespreizt sind, in welcher die Erregereinrichtung (22) angeordnet ist.

2. Elektrische Maschine nach Anspruch 1, **dadurch gekennzeichnet, dass** die Klauenpole (10,11) separat voneinander als Gleichteile vorliegen und zur Ausbildung des Rotors (4) wenigstens bereichsweise in einen gemeinsamen Träger eingebettet sind.

3. Elektrische Maschine nach einem der vorhergehenden Ansprüche, **dadurch gekennzeichnet, dass** die Erregereinrichtung (22) eine Erregerspule (28) mit wenigstens einer in Umfangsrichtung verlaufenden Erregerwicklung aufweist.

4. Elektrische Maschine nach einem der vorhergehenden Ansprüche, **dadurch gekennzeichnet, dass** unmittelbar benachbarte Klauenpole (10,11) und der Magnetflussleiter (29) die Erregerspule (28) wenigstens bereichsweise, insbesondere vollständig, umgreifen.

5. Elektrische Maschine nach einem der vorhergehenden Ansprüche, **dadurch gekennzeichnet, dass** der Stator (2) und die Erregereinrichtung (22) in axialer Richtung benachbart oder mit Überdeckung angeordnet sind.

6. Elektrische Maschine nach einem der vorhergehenden Ansprüche, **dadurch gekennzeichnet, dass** der Magnetflussleiter (29) in radialer Richtung nach innen und/oder nach außen über die Erregerspule (28) übersteht und freie Enden (16) der Aufnahmeenden (13) wenigstens eines Teils der Klauenpole (10,11) zumindest bereichsweise von dem Magnetflussleiter (29) in radialer Richtung überdeckt sind.

7. Elektrische Maschine nach einem der vorhergehenden Ansprüche, **dadurch gekennzeichnet, dass** in Umfangsrichtung zwischen den Wirkenden (12) der Klauenpole (10,11) jeweils ein Sperrmagnet (27) vorgesehen ist.

8. Elektrische Maschine nach einem der vorhergehenden Ansprüche, **gekennzeichnet durch** ein Planetengetriebe (5), welches ein Sonnenrad (6), ein Hohlrad (7) und einen Planetenträger (8) mit wenigstens einem eine Wirkverbindung zwischen Sonnenrad (6) und Hohlrad (7) herstellenden Planetenrad (9) aufweist, wobei der Rotor (4) mit dem Sonnenrad (6), dem Hohlrad (7) oder dem Planetenträger (8) drehfest wirkverbunden ist.

9. Verwendung einer elektrischen Maschine (1) nach einem oder mehreren der vorhergehenden Ansprüche in einem Radnabenantrieb oder Einzelradantrieb eines Fahrzeugs.

## Claims

1. Electrical machine (1) comprising a stationary stator (2) and a rotor (4) which is mounted in a rotationally movable manner, wherein the rotor (4) has numerous claw poles (10, 11) with which an excitation device (22) for generating an excitation field is associated, wherein active ends (12) of the claw poles (10, 11) are surrounded by the stator (2) or surround the stator (2) and the receiving ends (13) of said claw poles, which receiving ends are situated opposite the active ends (12), are each arranged directly adjacent to a magnetic flux conductor (29) of the excitation device (22), wherein the excitation device (22) is stationary, **characterized in that** the receiving ends (13), which are situated opposite the active ends (12), are widened inwards and outwards, alternately in the radial direction, to form an excitation receptacle (21) in which the excitation device (22) is arranged.

2. Electrical machine according to Claim 1, **characterized in that** the claw poles (10, 11) are present separately from one another as identical parts and are embedded, at least in regions, in a common carrier for forming the rotor (4).

3. Electrical machine according to either of the preceding claims, **characterized in that** the excitation device (22) has an excitation coil (28) with at least one excitation winding which runs in the circumferential direction.

4. Electrical machine according to one of the preceding claims, **characterized in that** directly adjacent claw poles (10, 11) and the magnetic flux conductor (29) surround the excitation coil (28) at least in regions, in particular completely.

5. Electrical machine according to one of the preceding claims, **characterized in that** the stator (2) and the excitation device (22) are arranged adjacent to one another or with an overlap in the axial direction.

6. Electrical machine according to one of the preceding claims, **characterized in that** the magnetic flux conductor (29) projects beyond the excitation coil (28) inwards and/or outwards in the radial direction and free ends (16) of the receiving ends (13) of at least some of the claw poles (10, 11) are overlapped in the radial direction, at least in regions, by the magnetic flux conductor (29).

7. Electrical machine according to one of the preceding claims, **characterized in that** a blocking solenoid (27) is provided between the active ends (12) of the claw poles (10, 11) in the circumferential direction in each case.

8. Electrical machine according to one of the preceding claims, **characterized by** a planetary gear mechanism (5) which has a sun gear (6), a ring gear (7) and a planet carrier (8) with at least one planet gear (9) which establishes an operative connection between the sun gear (6) and the ring gear (7), wherein the rotor (4) is operatively connected in a rotationally fixed manner to the sun gear (6), the ring gear (7) or the planet carrier (8) .

9. Use of an electrical machine (1) according to one or more of the preceding claims in a wheel hub drive or single-wheel drive of a vehicle.

## Revendications

1. Moteur électrique (1) comprenant un stator fixe (2) et un rotor (4) supporté de manière mobile en rotation, dans lequel le rotor (4) comporte de nombreux pôles à griffes (10, 11) auxquels est associé un dispositif excitateur (22) destiné à générer un champ excitateur, dans lequel les extrémités actives (12) des pôles à griffes (10, 11) sont enserrées par le stator (2) ou enserrent le stator (2) et leurs extrémités de réception (13) opposées aux extrémités actives (12) sont respectivement disposées de manière directement adjacente à un conducteur de flux magnétique (29) du dispositif excitateur (22), dans lequel le dispositif excitateur (22) est stationnaire,
**caractérisé en ce que** les extrémités de réception (13) opposées aux extrémités actives (12) sont alternativement réparties dans la direction radiale vers l'intérieur et vers l'extérieur pour former un réceptacle d'excitateur (21) dans lequel est disposé le dispositif excitateur (22) .

2. Moteur électrique selon la revendication 1, **caractérisé en ce que** les pôles à griffes (10, 11) sont présents séparément les uns des autres en tant que parties identiques et sont intégrés au moins par zones dans un support commun pour former le rotor (4).

3. Moteur électrique selon l'une des revendications précédentes, **caractérisé en ce que** le dispositif excitateur (22) comprend une bobine excitatrice (28) comportant au moins un enroulement excitateur s'étendant dans la direction périphérique.

4. Moteur électrique selon l'une des revendications précédentes, **caractérisé en ce que** le pôle à griffes (10, 11) directement adjacent et le conducteur de flux magnétique (29) entourent la bobine excitatrice (28) au moins par zones, en particulier entièrement.

5. Moteur électrique selon l'une des revendications précédentes, **caractérisé en ce que** le stator (2) et le dispositif excitateur (22) sont disposés de manière adjacente ou à se chevaucher dans la direction axiale.

6. Moteur électrique selon l'une des revendications précédentes, **caractérisé en ce que** le conducteur de flux magnétique (29) fait saillie dans la direction radiale vers l'intérieur et/ou vers l'extérieur au-delà de la bobine excitatrice (28) et **en ce que** les extrémités libres (16) des extrémités de réception (13) d'au moins une partie des pôles à griffes (10, 11) sont recouvertes au moins par zones dans la direction radiale par le conducteur de flux magnétique (29).

7. Moteur électrique selon l'une des revendications précédentes, **caractérisé en ce qu'**il est respectivement prévu un aimant de blocage (27) dans la direction circonférentielle entre les extrémités actives (12) des pôles à griffes (10, 11).

8. Moteur électrique selon l'une des revendications précédentes, **caractérisé par** un engrenage planétaire (5) comprenant un planétaire (6), une couronne (7) et un porte satellites (8) comportant au moins un planétaire (9) établissant une liaison fonctionnelle entre le planétaire (6) et la couronne (7), dans lequel le rotor (4) est fonctionnellement relié de manière fixe en rotation au planétaire (6), à la couronne (7) ou au porte-satellites (8).

9. Utilisation d'un moteur électrique (1) selon l'une ou plusieurs des revendications précédentes dans le cas d'un entraînement de moyeu de roue ou d'un entraînement de roue individuel d'un véhicule.
